# EUROPEAN PATENT APPLICATION

(11) **EP 4 760 916 A1**
(43) Date of publication of application: **17.06.2026**
(21) Application number: 25797767.8
(22) Date of filing: 28.03.2025
(51) Int. Cl.: H01M 50/24, H01M 50/342, H01M 10/04, H01M 50/271, H01M 50/249

(54) **BATTERY MODULE, AND BATTERY PACK AND VEHICLE INCLUDING SAME**

(30) Priority: 29.04.2024 KR 20240057161; 19.11.2024 KR 20240165205
(71) Applicant: LG Energy Solution, Ltd., Seoul 07335 (KR)
(72) Inventor: LEE, Joo-Hyoung, Daejeon 34122 (KR)
(74) Representative: Plasseraud IP
(86) International application number: PCT/KR2025/004048
(87) International publication number: WO 2025/230142

(57) **Abstract**

A battery module includes a plurality of battery cells, a module case configured to accommodate the plurality of battery cells, wherein at least a part of one surface of the module case is perforated to form a venting hole, and a retainer is provided on an inner peripheral surface of the venting hole, and a block member configured to cover at least a part of the venting hole, wherein at least a part of the block member is inserted into the venting hole so that the retainer blocks the block member from being separated inward of the module case.

## Description

### TECHNICAL FIELD

The present disclosure relates to a battery module, and a battery pack and vehicle including the same.

This application is based on and claims priority from Korean Patent Application No. 10-2024-0057161, filed on April 29, 2024, with the Korean Intellectual Property Office, the disclosure of which is incorporated herein in its entirety by reference.

This application is based on and claims priority from Korean Patent Application No. 10-2024-0165205, filed on November 19, 2024, with the Korean Intellectual Property Office, the disclosure of which is incorporated herein in its entirety by reference.

### BACKGROUND ART

Secondary batteries, which offer a high applicability depending on various product groups and have electrical characteristics such as a high energy density, are commonly applied not only to portable devices but also to electric vehicles (EVs) or hybrid electric vehicles (HEVs), which are driven by electrical drive sources. These secondary batteries are gaining attention as a new energy source for enhancing environmental sustainability and energy efficiency. This is due not only to their primary advantage of drastically reducing the use of fossil fuels, but also to the fact that they generate no by-products during energy use.

Currently, widely used types of secondary batteries include lithium ion batteries, lithium polymer batteries, nickel cadmium batteries, nickel hydride batteries, and nickel zinc batteries. When a high output voltage is required, multiple battery cells may be connected in series to constitute a battery module or battery pack. Further, in order to increase charge and discharge capacities, multiple battery cells may be connected in parallel to constitute a battery module or battery pack. Accordingly, the number of battery cells included in the battery module or pack may be set in various ways based on the required output voltage, or charge and discharge capacities.

As the use of secondary batteries has become increasingly widespread in the form of the battery module and battery pack with multiple connected battery cells, incidents of ignition and explosion have emerged, highlighting the critical importance of addressing safety concerns in secondary batteries.

### DISCLOSURE

### Technical Problem

The present disclosure provides a battery module capable of effectively preventing or delaying the propagation of thermal runaway between cells by smoothly discharging gases or flames, generated inside the battery module, to the outside during a thermal runaway event inside the battery module.

Further, the present disclosure provides a battery module capable of achieving enhanced safety and reliability by preventing or suppressing gases or flames, discharged to the outside of the battery module during a thermal runaway event inside the battery module, from re-entering the battery module.

### Technical Solution

To address the above, according to one embodiment of the present disclosure, there is provided a battery module including a plurality of battery cells; a module case configured to accommodate the plurality of battery cells, wherein at least a part of one surface of the module case is perforated to form a venting hole, and a retainer is provided on an inner peripheral surface of the venting hole; and a block member configured to cover at least a part of the venting hole, wherein at least a part of the block member is inserted into the venting hole so that the retainer blocks the block member from being separated inward of the module case.

The venting hole and the retainer may be formed on an upper surface of the module case, and the block member may be configured to be inserted into the venting hole and be seated on the retainer.

The retainer may be formed by at least a part of the inner peripheral surface of the venting hole protruding inward of the venting hole.

An outer periphery of the block member may be shaped such that at least a part thereof corresponds to the retainer formed in the venting hole.

At least a part of the retainer may be inclined inward of the venting hole.

The venting hole may include a plurality of venting holes, and at least some of the plurality of venting holes may be configured such that the angle of the retainer varies differentially.

The retainer may be stepped inward of the venting hole.

An end of the block member may be configured to engage with the retainer in a fitting manner.

The block member may be configured to be separable outward by a pressure of a fluid inside the module case.

The battery module may further include a coupling member configured to couple the block member with one surface of the module case and to enable rotation of the block member.

The battery module may further include an adhesive member interposed between the retainer and the block member and configured to melt by heat.

Further, the present disclosure provides a battery pack including the battery module according to the present disclosure.

Then, the present disclosure provides a vehicle including the battery module according to the present disclosure.

According to another embodiment of the present disclosure, there is provided a battery module case including a case body configured to accommodate a plurality of battery cells, a top plate coupled to the case body to form an upper surface, wherein at least a part of the top plate is perforated to form a venting hole, and a retainer is provided on an inner peripheral surface of the venting hole; and a block member configured to cover at least a part of the venting hole, wherein at least a part of the block member is inserted into the venting hole so that the retainer blocks the block member from being separated inward of the module case.

The block member of the battery module case may be configured to be inserted into the venting hole and be seated on the retainer.

At least a part of the retainer of the battery module case may be inclined inward of the venting hole.

The battery module case may further include an end plate provided on at least one surface of the case body to face an electrode lead of the plurality of battery cells.

Further, the present disclosure provides a battery module including the battery module case.

### Advantageous Effects

According to one aspect of the present disclosure, a block member, which is configured to block it from being separated inward of a module case by a retainer formed on the inner peripheral surface of a venting hole, closes the venting hole before a thermal runaway event, thereby preventing or suppressing the ingress of contaminants into a battery module from the outside.

According to another aspect of the present disclosure, the propagation of thermal runaway between battery cells may be minimized by preventing or suppressing high-temperature gases or flames, oxygen, and other emissions, generated in the battery cells during a thermal runway event between the battery cells, from re-entering a battery module. Accordingly, the safety and reliability of the battery module may be enhanced.

According to still another aspect of the present disclosure, a block member may open a venting hole during a thermal runaway event to smoothly discharge high-temperature gases or flames and other emissions to the outside of a battery module, thereby effectively preventing or delaying the propagation of thermal runaway between battery cells.

According to yet another aspect of the present disclosure, events such as fire or explosion, caused by thermal runaway inside a battery pack including multiple battery modules or a device equipped with the battery modules or battery pack, may be prevented or delayed.

In addition to the above, the present disclosure may have various other effects, which will be either described in each embodiment or may be readily inferred by those skilled in the art, and thus, descriptions thereof will be omitted.

### DESCRIPTION OF DRAWINGS

The following drawings attached hereto illustrate the embodiments of the present disclosure and serve to further understand the technical idea of the present disclosure together with the detailed description of the disclosure to be described later. Therefore, the present disclosure should not be construed as being limited to the matters illustrated in the drawings.
FIG. 1 is a perspective view of an entire battery module according to one embodiment of the present disclosure.
FIG. 2 is an exploded perspective view of the battery module according to one embodiment of the present disclosure.
FIG. 3 is a cross-sectional view of the battery module according to one embodiment of the present disclosure, illustrating, for example, the cross section taken along line I-I' in FIG. 1.
FIG. 4 is an enlarged view of portion A in FIG. 3, illustrating a retainer included in the battery module according to one embodiment of the present disclosure.
FIG. 5 is a view illustrating a retainer included in the battery module according to another embodiment of the present disclosure.
FIG. 6 is a view illustrating the retainer included in the battery module according to another embodiment of the present disclosure.
FIG. 7 is a view illustrating the retainer included in the battery module according to another embodiment of the present disclosure.
FIG. 8 is a view illustrating the separation of a block member during a thermal runaway event inside the battery module according to one embodiment of the present disclosure.
FIG. 9 is a view illustrating the retainer included in the battery module according to another embodiment of the present disclosure.
FIGS. 10 and 11 are views illustrating a coupling member included in the battery module according to another embodiment of the present disclosure.
FIGS. 12 and 13 are views illustrating an adhesive member included in the battery module according to another embodiment of the present disclosure.
FIG. 14 is a schematic perspective view of a battery pack including the battery module according to one embodiment of the present disclosure.
FIG. 15 is a schematic perspective view of a vehicle including the battery pack according to one embodiment of the present disclosure.

In some of the attached drawings, corresponding components are given the same reference numerals. Those skilled in the art would appreciate that the drawings depict elements simply and clearly and have not necessarily been drawn to scale. For example, to facilitate understanding of various embodiments, the dimensions of some elements illustrated in the drawings may be exaggerated compared to other elements. Additionally, elements of the known art that are useful or essential in commercially viable embodiments may often not be depicted so as not to interfere with the spirit of the various embodiments of the present disclosure.

### BEST MODE

Hereinafter, embodiments of the present disclosure will be described in detail with reference to the accompanying drawings. The terms or words used in this specification and the claims should not be interpreted as being limited to their usual or dictionary meanings, but should be interpreted as having meanings and concepts that are consistent with the technical idea of the present disclosure, based on the principles that the inventors may appropriately define the concepts of the terms to describe their disclosure in the best way possible.

Therefore, since the embodiments described in this specification and the configurations illustrated in the drawings are merely one embodiment of the present disclosure and do not represent all of the technical ideas of the present disclosure, it should be understood that various equivalents and modifications that may replace them at the time of filing may exist.

Further, the present disclosure includes various embodiments. For configurations that are substantially identical or similar across the respective embodiments, redundant descriptions are omitted, and the following description focuses on the differences.

Meanwhile, in the present embodiment, terms such as front, rear, left, right, up, and down may be used to describe directions. However, it will be apparent to those skilled in the art that these terms are only for convenience of description and may depend on factors such as the position of a target object and the position of an observer.

For example, in the embodiments of the present disclosure, the X-axis direction depicted in the drawing may represent the left-right direction, the Y-axis direction may represent the front-rear direction perpendicular to the X-axis direction on the horizontal plane (*e.g.,* XY plane), and the Z-axis direction may represent the up-down direction (*e.g.,* vertical direction) perpendicular to both the X-axis and Y-axis directions.

Battery cells involve chemical reactions during charge and discharge. Therefore, their performance may deteriorate when used in environments with temperatures that are either higher or lower than the optimal range. Moreover, when appropriate temperature heat control is not maintained, there is a persistent risk of unexpected ignition or explosion. Further, a battery module, which is composed of multiple battery cells, is structured to densely accommodate the battery cells inside a module housing. Therefore, when a thermal event occurs in one of the battery cells inside the battery module, high-temperature gases or flames released may spread to adjacent battery cells, potentially triggering a chain reaction of battery cell explosions, which poses a significant safety hazard.

The present disclosure provides a structure that discharges high-temperature gases or flames generated inside a battery module to the outside during a thermal runway even inside the battery module, thereby preventing or suppressing heat accumulation inside the battery module and preventing or suppressing the discharged gases or flames from re-entering the battery module.

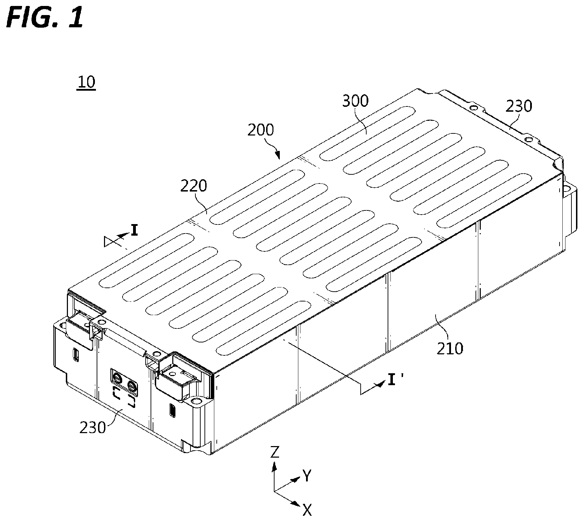

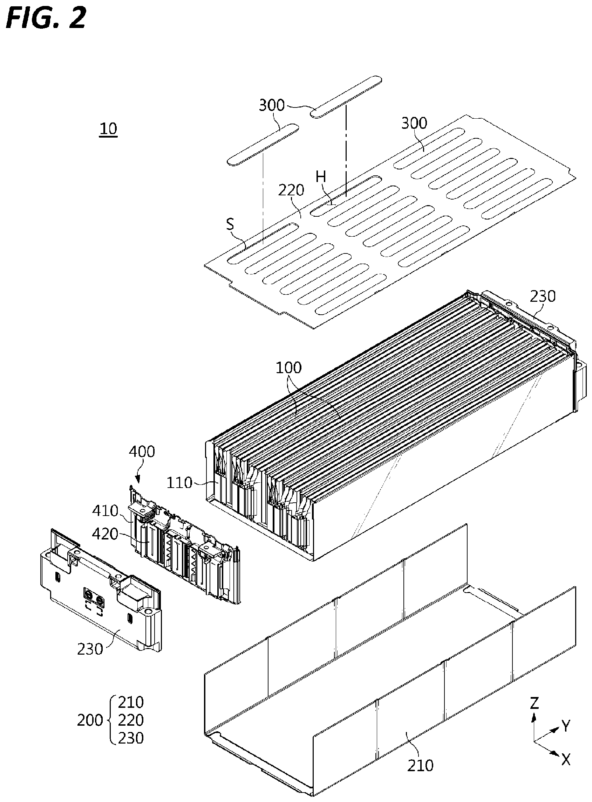

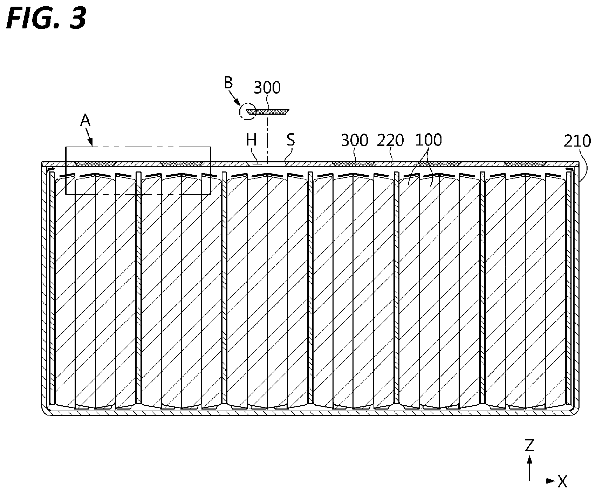

FIG. 1 is a perspective view of an entire battery module according to one embodiment of the present disclosure, and FIG. 2 is an exploded perspective view of the battery module according to one embodiment of the present disclosure. Further, FIG. 3 is a cross-sectional view of the battery module according to one embodiment of the present disclosure, illustrating, for example, the cross section taken along line I-I' in FIG. 1.

Referring to FIGS. 1 to 3, a battery module 10 according to one embodiment of the present disclosure may include a battery cell 100, a module case 200, and a block member 300.

The battery cell 100 may be provided in plurality. According to one embodiment, a plurality of battery cells 100 may be stacked in one direction. For example, as illustrated in FIG. 2, the plurality of battery cells 100 may be stacked along the left-right direction (*e.g*., X-axis direction).

The battery cell 100 may be a pouch-type secondary battery. The battery cell 100 may include an electrode assembly and a cell case that accommodates the electrode assembly. The cell case may accommodate the electrode assembly in an accommodating region, and the rim surrounding the accommodating region may be heat-sealed to form a sealing portion. The sealing portion may be provided on three of the four sides of the battery cell 100.

Further, the plurality of battery cells 100 may each include an electrode lead 110. The electrode lead 110 may be connected to the electrode assembly and be drawn out of the cell case, thus functioning as an electrode terminal.

The electrode lead 110 may be provided in a pair, with the pair of electrode leads 110 drawn out from both ends of the battery cell 100, i.e. in the longitudinal direction (*e.g*., ±Y-axis direction). At this time, the pair of electrode leads 110 may include a positive lead and a negative lead. When necessary, the battery cell 100 may have a form in which two electrode leads 110 are positioned only on one end in the Y-axis direction, for example, on the end in the +Y-axis direction.

The battery cell 100 may be provided in an upright posture with the side that does not include the sealing portion facing downward. As illustrated in FIG. 2, the plurality of battery cells 100 may be arranged side by side in the left-right direction (X-axis direction) while standing upright in the vertical direction (*e.g.*, Z-axis direction). At this time, each battery cell 100 may have the sealing portion facing the front-rear direction (*e.g.,* Y-axis direction) and the up-down direction (*e.g.,* Z-axis direction), with the accommodating region facing the left-right direction (*e.g*., X-axis direction).

Meanwhile, the present disclosure is not limited by the specific type or form of the battery cell 100, and various other battery cells 100 may be employed to constitute a stack of the cells 100 of the present disclosure. As illustrated in the drawings, the present embodiment targets a pouch-type secondary battery with a high energy density and ease of stacking, but a cylindrical or prismatic secondary battery may also be applied as the battery cell 100.

Referring to FIG. 2, the battery module 10 of the present disclosure may further include a busbar frame assembly 400. The busbar frame assembly 400 may be provided inside the module case 200 and may be configured to cover at least one side of the plurality of battery cells 100. In the present embodiment, as illustrated in FIG. 2, the busbar frame assembly 400 may be coupled to the front and rear of the plurality of battery cells 100.

The busbar frame assembly 400 may include a busbar frame 410 and a plurality of busbars 420. The busbar frame 410 may be generally coupled to the front and rear of the plurality of battery cells 100. The busbar frame 410 may have slits through which the electrode leads 110 of the battery cells 100 may be drawn out in the +Y-axis- or -Y-axis direction. Further, the busbar frame 410 may be made of an electrically insulating material such as a plastic material, and may be configured to allow the busbars 420 to be attached to the outer surface thereof.

The plurality of busbars 420 serve to connect the battery cells 100 in series and/or in parallel, and may be made of a metallic material such as copper, aluminum, or nickel and may have a bar shape. The electrode leads 110 of the battery cells 100 pass through the slits of the busbar frame 410 and are drawn out to the busbar frame 410. The drawn-out portions of the electrode leads may be attached to the surfaces of the busbars 420 by a method such as welding.

Meanwhile, referring to FIGS. 1 and 2, the module case 200 may be configured to accommodate the battery cells 100. For example, the module case 200 may define an internal space and may be configured to accommodate the stack of cells 100 in the internal space. The module case 200 may be made of a metallic material with rigidity and heat resistance to physically or chemically protect the accommodated battery cells 100.

The module case 200 may be formed with a venting hole H. The venting hole H may be formed in one surface of the module case 200. At least a part of one surface of the module case 200 may be perforated to form the venting hole H. The venting hole H may be configured to discharge venting gases, generated from the battery cells 100, to the outside of the module case 200.

For example, as illustrated in FIGS. 2 and 3, the venting hole H is formed in the upper surface of the module case 200, allowing directional venting upward from the battery module 10 through the venting hole H.

A plurality of venting hall H may be provided at regular intervals from each other in the horizontal direction (*e.g*., X-axis and Y-axis directions). According to one embodiment, the plurality of venting holes H may be provided for every four battery cells 100 stacked in one direction.

Further, the module case 200 may have a retainer S. According to one embodiment, the retainer S may be formed on the inner peripheral surface of the venting hole H. The venting hole H may be configured such that the cross-sectional area thereof is at least partially reduced by the retainer S. For example, in the embodiment as illustrated in FIG. 3, the venting hole H may be configured such that the cross-sectional area thereof decreases inward of the module case 200.

Meanwhile, the block member 300 may be configured to cover at least a part of the venting hole H. The block member 300 may be configured such that at least a part thereof is inserted into the venting hole H. For example, the block member 300 may be configured to fill the venting hole H. The block member 300 may be fitted into the venting hole H. For example, the block member 300 may take the form of a plug that fills the internal space of the venting hole H. Further, the block member 300 may be provided for each of the plurality of venting holes H.

The block member 300 may be configured to minimize the transfer of venting gases or flames and other emissions, released during a thermal event inside the battery module 10, to other battery modules 10.

To this end, the block member 300 may be made of a material with excellent heat resistance and/or fire resistance such as mica or a silicone composite material. Thereby, the block member 300 may maintain structural stability as it resists deformation even when high-temperature heat is generated, and therefore, may stably block high-temperature gases or flames and other emissions generated from the battery cells 100.

The block member 300 may, however, have a potential to become separated from the module case 200 and open the venting hole H due to gravity, impact, heat, or other factors. To address this, the block member 300 according to one embodiment of the present disclosure may be configured to allow the retainer S to block the block member 300 from being separated inward. The retainer S may allow the block member 300 to be inserted into a reduced cross-sectional area region of the venting hole H.

When there is no retainer S, the block member 300 may be unintentionally separated from the module case 200 due to gravity, impact, heat, or other factors, potentially leaving the venting hole H open even under a normal condition. However, according to the above-described configuration of the present disclosure, the block member 300 may remain in place to close the venting hole H under a normal condition before thermal runaway inside the battery module 10, thereby preventing or suppressing the ingress of contaminants into the battery module from the outside.

Further, according to the above-described configuration of the present disclosure, the intrusion of high-temperature gases or flames into the battery module 10 from the outside may be prevented or suppressed, thereby suppressing the propagation of thermal runaway between the battery cells 100. Accordingly, the above-described configuration of the present disclosure may guarantee the safety and reliability of the battery module 10.

Referring to FIGS. 2 to 5, the module case 200 may include a case body 210 and a top plate 220. The case body 210 may be configured to allow the battery cells 100 to be reliably seated thereon. The case body 210 may be made of a metallic material with rigidity and heat resistance to physically or chemically protect the accommodated battery cells 100.

The upper side and front and rear sides of the case body 210 may be open. For example, as illustrated in FIG. 2, the case body 210 may take the form of a U-frame. When the case body 210 is provided in a U-frame form, it may cover both the side surfaces and the lower surface of the plurality of battery cells 100. The case body 210 may include left and right plates that cover both the side surfaces of the plurality of battery cells 100, and a lower plate that covers the lower surface of the plurality of battery cells 100. Then, the left and right plates and the lower plate may be provided in an integrated form.

The top plate 220 may be provided to form the upper surface of the module case 200. When the case body 210 is provided in a U-frame form, the top plate 220 may be coupled to the open upper side of the case body 210. According to one embodiment, the top plate 220 may be coupled to the case body 210 by welding. In this case, the combination of the top plate 220 and the case body 210 may have a rectangular tubular shape with open front and rear sides.

Referring to FIG. 2, the module case 200 may include an end plate 230 provided at the open front and rear sides of the case body 210. The end plate 230 may be coupled to the case body 210 by welding. Meanwhile, although not illustrated for convenience, the inner surface of the end plate 230 facing the battery cells 100 may be made of an electrically insulating material, while the outer surface thereof may be made of a metallic material. Further, the end plate 230 may be partially provided with holes or slits to expose components of the battery module 10 that need to be externally accessible, such as positive and negative terminals or connectors.

In addition, the module case 200 may have various other shapes. For example, the module case 200 may include a lower case in the form of a box with an open upper end and an upper cover that closes the open upper end of the lower case. Alternatively, the module case 200 may take the form of a mono frame. For example, the case body 210 may be configured to have a rectangular tubular shape with the upper and lower surfaces and left and right surfaces, while the front and rear sides thereof remain open.

In the embodiment as illustrated in FIGS. 2 and 3, the venting hole H and the retainer S may be formed in the upper surface of the module case 200, i.e., on the top plate 220. This enables directional venting upward from the battery module 10 through the venting hole H.

The block member 300 may be configured to be seated on the retainer S. When the block member 300 is inserted into the venting hole H formed in the upper surface of the module case 200, the block member 300 may be subjected to an increased downward force toward the inside of the module case 200 due to gravity. At this time, as in the above-described configuration of the present disclosure, the block member 300 may be prevented or suppressed from falling into the module case 200 by being seated on the retainer S.

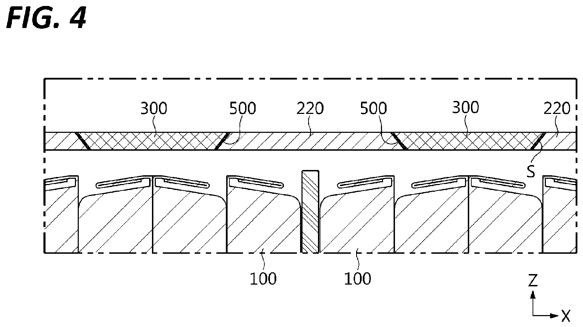

FIG. 4 is an enlarged view of portion A in FIG. 3, illustrating the retainer S included in the battery module according to one embodiment of the present disclosure.

Referring to FIG. 4, the retainer S may be formed by at least a part of the inner peripheral surface of the venting hole H protruding inward of the venting hole H. The retainer S may be provided on the lower side of the inner peripheral surface of the venting hole H. The retainer S may be configured either as an overall diagonal shape as in the embodiment illustrated in FIG. 4, or as a partially inwardly protruding shape.

According to the above-described configuration of the present disclosure, the position of the block member 300 may be restricted when the block member 300 is inserted into the venting hole H.

Meanwhile, the outer periphery of the block member 300 (*e.g.,* portion B in FIG. 3) may be shaped such that at least a part thereof corresponds to the retainer S. Here, the outer periphery of the block member 300 may refer to not only the outer peripheral surface but also a part of the lower surface of the block member 300. Accordingly, the block member 300 may be configured to be inserted into the venting hole H and to completely come into close contact with the retainer S formed on the inner peripheral surface of the venting hole H.

According to the above-described configuration of the present disclosure, since the block member 300 and the retainer S are in close contact without any gaps, the possibility of high-temperature gases or heat from the outside entering through any gaps between the block member 300 and the retainer S may be effectively blocked.

According to one embodiment as illustrated in FIG. 4, at least a part of the retainer S may be inclined inward of the venting hole H. The retainer S may have a diagonal shape inclined inward of the module case 200. In other words, the inner peripheral surface of the venting hole H may have a slope. The inclination angle of the retainer S may be acute angle. In this case, the outer peripheral surface of the block member 300 may also have a diagonal shape to correspond to the shape of the retainer S.

According to the above-described configuration of the present disclosure, the retainer S may be formed by simply machining the inner peripheral surface of the venting hole H. In addition, the block member 300 may be brought into close contact with the diagonal-shaped retainer S, ensuring a stronger fixing force for the block member 300. Accordingly, the intrusion of high-temperature gases or heat from the outside may be further prevented or suppressed.

Meanwhile, referring to FIG. 4, the battery module 10 according to one embodiment of the present disclosure may further include an adhesive member 500. The adhesive member 500 may be interposed between the retainer S and the block member 300. The adhesive member 500 may include, for example, an adhesive or an adhesive tape.

According to the above-described configuration of the present disclosure, providing the adhesive member 500 may ensure an enhanced fixing force between the block member 300 and the retainer S. Moreover, the block member 300 may be stably fixed to the top plate 220 of the module case 200 by the adhesive member 500.

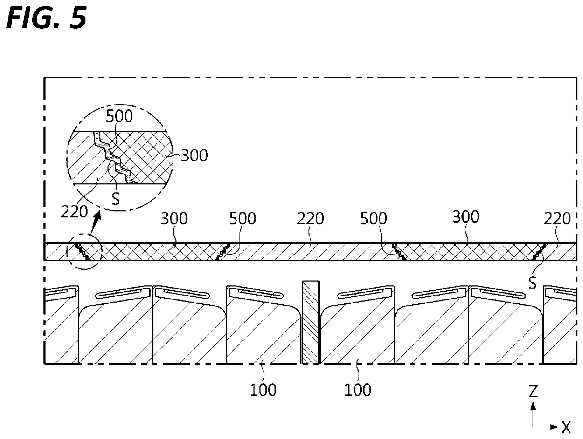

Hereinafter, various embodiments related to the shapes of the retainer S and the block member 300 will be described with reference to FIGS. 5 to 7.

FIG. 5 is a view illustrating the retainer S included in the battery module according to another embodiment of the present disclosure.

In another embodiment as illustrated in FIG. 5, the retainer S may have a corrugated shape. The retainer S may be shaped with alternating concave and convex portions. The block member 300 may be shaped to interlock with such a shape of the retainer S.

According to the above-described configuration of the present disclosure, the contact area between the block member 300 and the retainer S increases, which may further prevent or suppress the separation of the block member 300 from the venting hole H. Further, in the above-described configuration of the present disclosure, the adhesive member 500 may be interposed between corrugations of both the retainer S and the block member 300. This may prevent or suppress the adhesive material 500 from flowing downward due to the corrugated shape of the retainer S, thereby ensuring the adhesive member 500 to be more stably interposed between the retainer S and the block member 300.

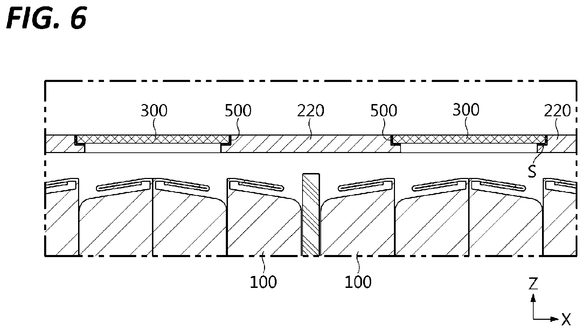

FIG. 6 is a view illustrating the retainer S included in the battery module 10 according to another embodiment of the present disclosure.

In another embodiment as illustrated in FIG. 6, the retainer S may be stepped inward of the venting hole H. The retainer S may be stepped down as it extends inward of the module case 200. In other words, the retainer S may be formed such that the lower side of the inner peripheral surface of the venting hole H formed in the top plate 220 of the module case 200 protrudes inward of the venting hole H. The cross section of the venting hole H may have an inverted hat shape.

In this case, the block member 300 may be configured to fill the entire venting hole H. Alternatively, in the embodiment as illustrated in FIG. 6, the block member 300 may be positioned only on the top of the retainer S. In this case, the block member 300 may take the form of a flat plate. The height of the block member 300 may correspond to the thickness of the top plate 220 minus the thickness of the retainer S.

According to the above-described configuration of the present disclosure, the block member 300 may come into contact not only at the outer peripheral surface but also at a part of the lower surface thereof with the inner peripheral surface of the stepped venting hole H. Accordingly, the block member 300 may be more stably seated on the retainer S. Further, in the above-described configuration of the present disclosure, the adhesive member 500 may be interposed across not only the outer peripheral surface but also a part of the lower surface of the block member 300. This may enhance the fixing force between the block member 300 and the retainer S, further preventing or suppressing the intrusion of high-temperature gases or heat from the outside.

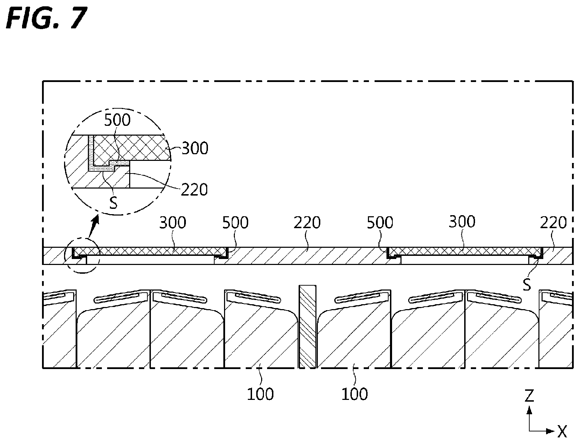

FIG. 7 is a view illustrating the retainer S included in the battery module 10 according to another embodiment of the present disclosure.

In another embodiment as illustrated in FIG. 7, the end of the block member 300 may be configured to engage with the retainer S in a fitting manner. For example, the retainer S may have a groove formed such that at least a part thereof is recessed. Further, the end of the block member 300 may at least partially protrude downward to form a protrusion that is configured to be inserted into the retainer S.

According to the above-described configuration of the present disclosure, the block member 300 and the retainer S have a male-female coupling structure, thereby allowing the block member 300 to be more stably seated on the retainer S.

Further, in the above-described configuration of the present disclosure, the adhesive member 500 may be interposed in the groove formed in the retainer S, which may prevent or suppress the adhesive material 500 from flowing downward. Accordingly, the fixing force between the block member 300 and the retainer S may be enhanced, thereby further preventing or suppressing the intrusion of high-temperature gases or heat from the outside.

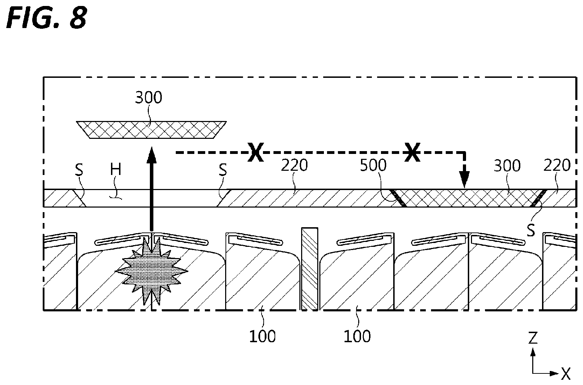

FIG. 8 is a view illustrating the separation of the block member during thermal runaway inside the battery module according to one embodiment of the present disclosure.

Referring to FIG. 8, the block member 300 may be configured to be separable outward by the pressure of a fluid inside the module case 200. In this case, the retainer S may be configured to block the block member 300 from being separated inward of the module case 200, but may not block the block member 300 from being separated outward of the module case 200. Due to the above-described shape of the retainer S, the block member 300 may be smoothly separated outward of the module case 200 (e.g., upward from the top plate 220).

The adhesive member 500 may be configured to melt by heat. According to one embodiment, the adhesive member 500 may be made of a material with a melting point of 150 °C or lower.

For example, during thermal runaway inside the battery module 10, the pressure of gases discharged from the battery cells 100 and/or the high heat from dust or flames may cause the adhesive member 500 to melt, resulting in a reduction in the adhesive strength between the retainer S and the block member 300. Therefore, the block member 300 may be separated from the top plate 220 of the module case 200 by the discharge pressure of venting gases or flames, discharged linearly toward the venting hole H from the inside of the module case 200, which allows for the opening of the venting hole H.

In this case, among a plurality of block members 300, only some block members 300 located above the battery cells 100 where a thermal event generating venting gases or flames has occurred may be separated from the top plate 220 of the module case 200. In addition, the remaining block members 300 except for the separated block members 300 may remain coupled to the top plate 220 of the module case 200, keeping the venting hole H closed.
the block member 300 may shield the venting hole H formed in the top plate 220 of the module case 200 in a normal condition to protect the battery cells 100 inside the module case 200. However, during a thermal event that generates venting gases or flames in some battery cells 100, the block member 300 may be separated from the top plate 220 of the module case 200, allowing the venting gases or flames to be smoothly discharged to the outside of the battery module 10.

According to the above-described configuration of the present disclosure, since the block member 300 may be completely separated from the top plate 220 of the module case 200, the venting hole H formed in the top plate 220 may be exposed to the outside of the battery module 10, which allows the venting gases or flames to be quickly discharged to the outside of the battery module 10 (see, *e.g.,* the thick solid arrow in FIG. 8). This helps to suppress or delay the occurrence of thermal runaway inside the battery module 10.

According to the above-described configuration of the present disclosure, the remaining block members 300, which correspond to the battery cells 100 where no thermal event has occurred, may still remain coupled to the top plate 220 of the module case 200, thereby preventing or suppressing the venting gases or flames discharged through the open venting hole H from re-entering the module case 200 (see, *e.g.,* the thick dotted arrow in FIG. 8). Moreover, the block members 300, which remain coupled to the module case 200, may block not only heat but also high-temperature gases or flames, and other emissions generated from the battery cells 100.

In this way, according to the above-described configuration of the present disclosure, during thermal runaway inside the battery module 10, gases or flames generated inside the battery module 10 may be smoothly discharged to the outside of the battery module 10, and the re-entry of gases or flames into the battery module 10 may be prevented or suppressed. Accordingly, the propagation of heat to neighboring battery modules 10 may be minimized, effectively preventing or delaying the propagation of thermal runaway, which may result in the enhanced safety and reliability of the battery module 10.

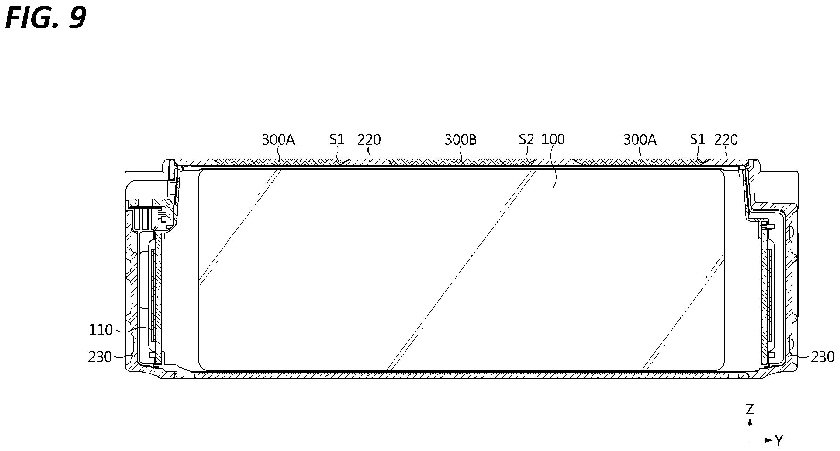

FIG. 9 is a view illustrating retainers S1 and S2 included in the battery module according to another embodiment of the present disclosure.

Referring to FIG. 9, a plurality of block members 300A and 300B may be configured to be separated from the top plate 220 of the module case 200 at different speeds or times depending on the positions thereof. For example, in the embodiment as illustrated in FIG. 9, when the retainers S1 and S2 are configured to have an inclined shape, at least some of the plurality of venting holes H formed in the top plate 220 may be configured such that the angles of the retainers S1 and S2 vary differentially. For example, as the angles of the retainers S1 and S2 increase, the retainers S1 and S2 may allow the block members 300 to be more easily separated outward from the top plate 220 of the module case 200.

As an example, in a group of the battery cells 100, the angles of the retainers S1 and S2 arranged in a row along the longitudinal direction of the battery cells 100 may be at least partially different from each other. Referring to FIG. 9, the angle of the retainer S2 located inward may be smaller than the angle of the retainer S1 located outward. Accordingly, during a thermal event in a group of the battery cells 100, the block member 300A located outward may be separated more quickly from the module case 200, compared to the block member 300B located inward.

The differential configuration of the angles of the retainers S1 and S2 based on the positions thereof may be applied in the venting induction direction of the battery module 10. According to the above-described configuration of the present disclosure, by varying the angles of the retainers S1 and S2 based on the positions thereof and controlling the separation speed of the block member 300, the gases or flames generated inside the battery module 10 may be directed for venting in a controlled manner based on the venting induction direction of the battery module 10.

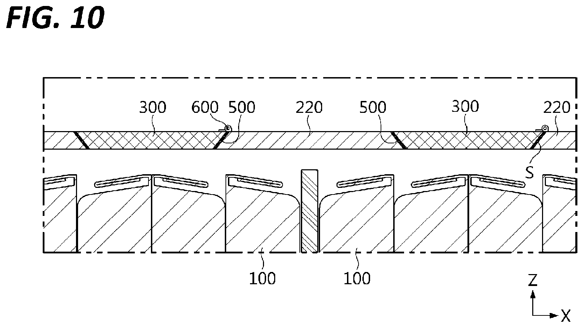

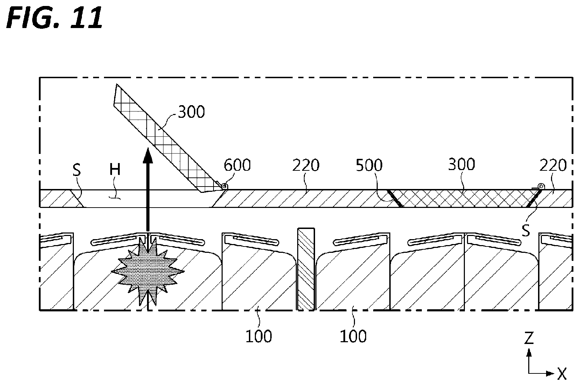

FIGS. 10 and 11 are views illustrating a coupling member 600 included in the battery module 10 according to another embodiment of the present disclosure.

Referring to FIGS. 10 and 11, the battery module 10 according to one embodiment of the present disclosure may further include the coupling member 600. The coupling member 600 may be configured to couple the block member 300 with one surface of the top plate 220 of the module case 200. The coupling member 600 may be provided on the inner peripheral surface of the venting hole H formed in the top plate 220. The coupling member 600 may be provided on the outer upper end of the block member 300. The coupling member 600 may be provided on one side of the block member 300. For example, in the embodiment as illustrated in FIGS. 10 and 11, the coupling member 600 may be provided on the upper end of the right side surface of the block member 300.

Such a coupling member 600 may be configured in a rotatable manner. In one embodiment, the coupling member 600 may be a hinge, but is not limited thereto. According to the above-described configuration of the present disclosure, the block member 300 may be configured to be rotated outward about the coupling member 600 to open the venting hole H.

Moreover, the coupling member 600 may be configured to have an elastic body to control the rotation of the block member 300. According to one embodiment, the coupling member 600 may take the form of a hinge spring. The block member 300 may be rotated inward or outward about the coupling member 600 to open or close the venting hole H.

When the pressure inside the module case 200 becomes equal to or higher than a reference pressure due to thermal runaway inside the battery cell 100, the block member 300 may be rotated to open the venting hole H formed in the top plate 220, thereby allowing the venting gases and/or flames to be discharged to the outside of the module case 200. The situation where the pressure inside the module case 200 is equal to or higher than the reference pressure may refer to a case where the pressure inside the module case 200 is higher than the pressure outside the module case 200 due to the generation of venting gases, and other factors. In this case, the air pressure inside the module case 200, which is applied to the block member 300 by the venting gases, may exceed the elastic force of the coupling member 600 that attempts to maintain the closing state of the block member 300. Accordingly, during thermal runaway in the battery cells 100, the block member 300 may be easily rotated outward from the module case 200 due to the pressure difference between the outside and inside of the module case 200.

According to the above-described configuration of the present disclosure, the venting gases and/or flames may be quickly discharged to the outside through the open portion of the module case 200. Then, the pressure inside the battery module 10 may rapidly decrease as the venting gases are discharged.

Further, according to the above-described configuration of the present disclosure, the venting gases or flames discharged from the venting hole H formed in the top plate 220 may be guided in one direction by the block member 300 that has rotated outward. This allows for directional venting of the venting gases or flames in one direction.

The block member 300 may be configured to close the venting hole H when the venting gases are discharged to the outside, causing the pressure inside the module case 200 to become equal to or lower than the reference pressure. The situation where the pressure inside the module case 200 is equal to or lower than the reference pressure may refer to a case where the pressure inside the module case 200 is lower than the pressure outside the module case 200 as the venting gases are discharged outward. In this case, the pressure of air applied to the block member 300 from the outside of the module case 200 as well as the elastic force of the coupling member 600 that attempts to maintain the closing state of the block member 300 may act. Therefore, when the venting gases are discharged to the outside and the pressure inside the module case 200 decreases, the block member 300 may be smoothly rotated inward of the module case 200 due to the pressure difference between the outside and inside of the module case 200 to close the venting hole H.

Accordingly, when thermal runaway inside the battery module 10 is almost over and the amount of venting gases discharged is reduced, the venting hole H may be easily closed by the block member 300, which may block the reverse flow of venting gases and/or flames into the module case 200. Additionally, additional ignition inside the module case 200 may be blocked by blocking the ingress of oxygen into the module case 200.

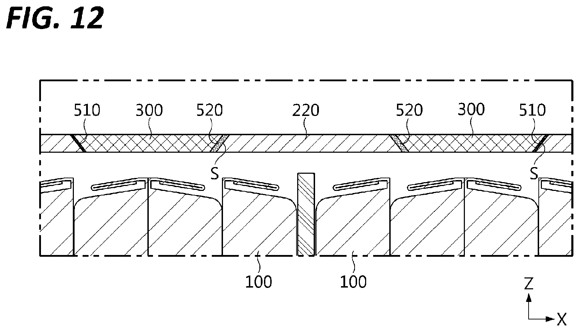

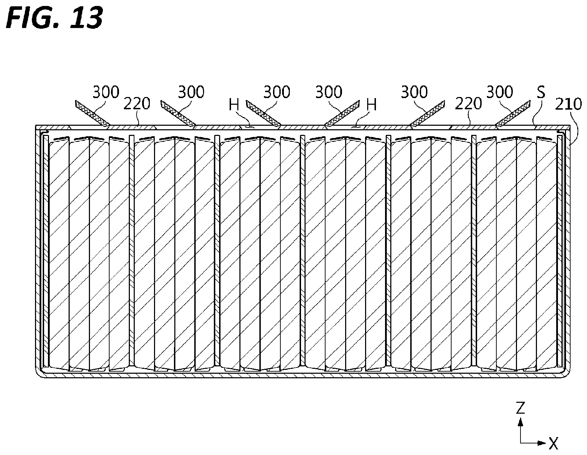

FIGS. 12 and 13 are views illustrating the adhesive member 500 included in the battery module according to another embodiment of the present disclosure.

As described above, the adhesive member 500 may be configured to melt by heat when the block member 300 is separated. In this case, in the embodiment as illustrated in FIG. 12, adhesive members 510 and 520 may be provided on both side surfaces of the block member 300, and the adhesive strength thereof may vary based on the positions thereof.

For example, the adhesive members 510 and 520 may include a first adhesive member 510 and a second adhesive member 520. The first adhesive member 510 may be provided on one side of the block member 300, while the second adhesive member 520 may be provided on the other side of the block member 300 opposite to the first adhesive member 510. According to one embodiment, the first adhesive member 510 and the second adhesive member 520 may be made of materials with different adhesive strengths. Additionally, the first adhesive member 510 and the second adhesive member 520 may be made of materials with different melting points.

For example, in the embodiment as illustrated in FIGS. 12 and 13, the adhesive strength of the first adhesive member 510 may be weaker than the adhesive strength of the second adhesive member 520. Accordingly, during a thermal event in the battery cells 100, the first adhesive member 510 will melt first, allowing only one side of the block member 300 to be separated from the retainer S. In this case, the second adhesive member 520 that does not yet melt may function as the coupling member 600 described above.

According to the above-described configuration of the present disclosure, the venting gases or flames discharged from the venting hole H may be guided in one direction by the block member 300 that has been rotated outward due to the action of the second adhesive member 520 that functions as the coupling member 600. This allows for directional venting of the venting gases or flames in one direction.

Moreover, at least some of the plurality of block members 300 may be configured such that the positions at which the first and second adhesive members 510 and 520 are provided are different from each other. Accordingly, during a thermal event in the battery cells 100, at least some of the plurality of block members 300 may be separated in different directions.

For example, in the embodiment as illustrated in FIG. 12, the block member 300 provided on the left side of the battery module 10 may have the first adhesive member 510 on the left side and the second adhesive member 520 on the right side. Additionally, the block member 300 provided on the right side of the battery module 10 may have the first adhesive member 510 on the right side and the second adhesive member 520 on the left side. Accordingly, in the embodiment as illustrated in FIG. 13, due to the pressure from the venting gases or flames during a thermal event in the battery cells 100, the block member 300 provided on the left side of the battery module 10 may be separated leftward of the venting hole H, while the block member 300 provided on the right side of the battery module 10 may be separated rightward of the venting hole H. In other words, during a thermal event in the battery cells 100, the plurality of block members 300 may be separated in opposite directions symmetrically with respect to the center of the battery module 10.

According to the above-described configuration of the present disclosure, the venting gases or flames, discharged from at least some of the plurality of venting holes H, may be directed for venting in different directions. This may further prevent or suppress the re-entry of the venting gases or flames between adjacent venting holes H. Therefore, according to the above-described configuration of the present disclosure, the propagation of thermal runaway between the battery cells 100 may be more effectively suppressed.

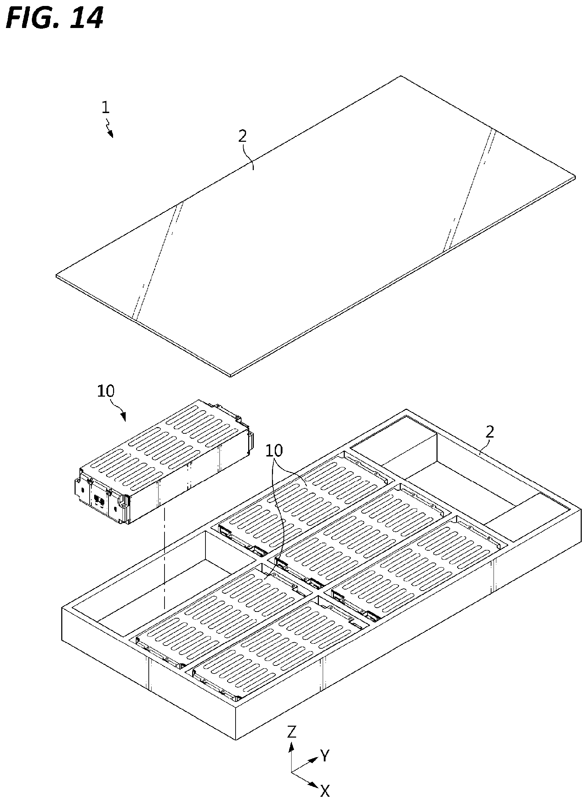

FIG. 14 is a schematic perspective view of a battery pack 1 including the battery module 10 according to one embodiment of the present disclosure.

Referring to FIG. 14, the battery pack 1 according to one embodiment of the present disclosure may include one or more battery modules 10 according to one embodiment of the present disclosure as described above. The battery pack 1 according to the present disclosure may further include a pack case 2 for accommodating the above-described components, such as a battery management system (BMS) for collectively controlling the charge and discharge of one or more battery modules 10, a current sensor, a fuse, and other related components.

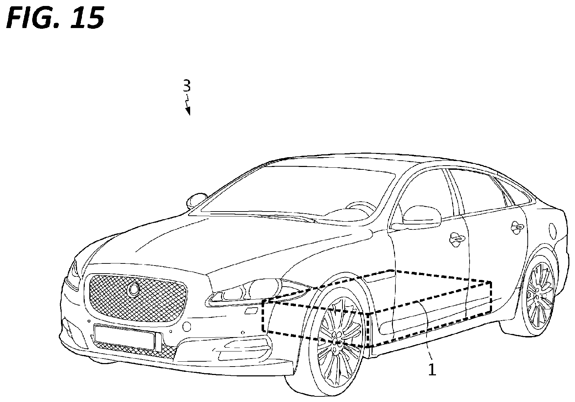

FIG. 15 is a schematic perspective view of a vehicle 3 including the battery pack 1 according to one embodiment of the present disclosure.

Referring to FIG. 15, the vehicle 3 according to one embodiment of the present disclosure may include the battery pack 1 according to one embodiment of the present disclosure, or one or more battery modules 10 according to one embodiment of the present disclosure. The vehicle 3 according to the present disclosure may be, for example, an electric vehicle, a hybrid vehicle, or a plug-in hybrid vehicle. The vehicle 3 includes both a four-wheeled vehicle and a two-wheeled vehicle. The vehicle 3 may operate upon receiving power from the battery pack 1 or the battery module 10 according to one embodiment of the present disclosure.

Although the present disclosure has been described above in detail with reference to limited embodiments and drawings, the present disclosure is not limited thereto, and various modifications and variations may be made by those skilled in the art within the technical idea of the present disclosure and the scope of equivalents of the patent claims described below.

## Claims

1. A battery module comprising:
a plurality of battery cells;
a module case configured to accommodate the plurality of battery cells, wherein at least a part of one surface of the module case is perforated to form a venting hole, and a retainer is provided on an inner peripheral surface of the venting hole; and
a block member configured to cover at least a part of the venting hole, wherein at least a part of the block member is inserted into the venting hole so that the retainer blocks the block member from being separated inward of the module case.

2. The battery module according to claim 1, wherein the venting hole and the retainer are formed on an upper surface of the module case, and
wherein the block member is configured to be inserted into the venting hole and be seated on the retainer.

3. The battery module according to claim 1, wherein the retainer is formed by at least a part of the inner peripheral surface of the venting hole protruding inward of the venting hole.

4. The battery module according to claim 1, wherein an outer periphery of the block member is shaped such that at least a part thereof corresponds to the retainer formed in the venting hole.

5. The battery module according to claim 1, wherein at least a part of the retainer is inclined inward of the venting hole.

6. The battery module according to claim 5, wherein the venting hole includes a plurality of venting holes, and
wherein at least some of the plurality of venting holes are configured such that the angle of the retainer varies differentially.

7. The battery module according to claim 1, wherein the retainer is stepped inward of the venting hole.

8. The battery module according to claim 1, wherein an end of the block member is configured to engage with the retainer in a fitting manner.

9. The battery module according to claim 1, wherein the block member is configured to be separable outward by a pressure of a fluid inside the module case.

10. The battery module according to claim 1, further comprising a coupler configured to couple the block member with one surface of the module case and to enable rotation of the block member.

11. The battery module according to claim 1, further comprising an adhesive interposed between the retainer and the block member and configured to melt by heat.

12. A battery pack comprising the battery module according to any one of claims 1 to 11.

13. A vehicle comprising the battery module according to any one of claims 1 to 11.

14. A battery module case comprising:
a case body configured to accommodate a plurality of battery cells;
a top plate coupled to the case body to form an upper surface, wherein at least a part of the top plate is perforated to form a venting hole, and a retainer is provided on an inner peripheral surface of the venting hole; and
a block member configured to cover at least a part of the venting hole, wherein at least a part of the block member is inserted into the venting hole so that the retainer blocks the block member from being separated inward of the module case.

15. The battery module case according to claim 14, wherein the block member is configured to be inserted into the venting hole and be seated on the retainer.

16. The battery module case according to claim 14, wherein at least a part of the retainer is inclined inward of the venting hole.

17. The battery module case according to claim 14, further comprising an end plate provided on at least one surface of the case body to face an electrode lead of the plurality of battery cells.

18. A battery module comprising the battery module case according to any one of claims 14 to 17.
